(19) **Europäisches Patentamt / European Patent Office / Office européen des brevets**

(11) **EP 4 576 600 A1**

(12) **EUROPEAN PATENT APPLICATION**

(43) Date of publication:
25.06.2025 Bulletin 2025/26

(21) Application number: 24220783.5

(22) Date of filing: 17.12.2024

(51) International Patent Classification (IPC):
H04B 7/0413 (2017.01)    H04B 7/06 (2006.01)

(52) Cooperative Patent Classification (CPC):
H04B 7/0413; H04B 7/0691

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 22.12.2023 CN 202311790674

(71) Applicant: Nokia Solutions and Networks Oy
02610 Espoo (FI)

(72) Inventors:
• MO, Jing Yan
  Shanghai (CN)
• ZHOU, Xia
  Shanghai, 201206 (CN)
• SUN, Rong Hai
  Shanghai, 201206 (CN)
• YIN, Xiao Lin
  Shanghai, 201206 (CN)
• LI, Da
  Shanghai, 201206 (CN)
• TIAN, Qi
  Shanghai, 201102 (CN)

(74) Representative: DREISS Patentanwälte PartG mbB
Friedrichstraße 6
70174 Stuttgart (DE)

(54) **NETWORK DEVICE, METHOD, APPARATUS, AND COMPUTER READABLE STORAGE MEDIUM**

(57) Example embodiments of the disclosure are directed to a network apparatus, method, apparatus, and computer-readable storage medium. The network device comprises: a housing; at least one set of first antennas and at least one set of second antennas, respectively arranged on a plurality of sides of the housing at a 45 degrees inclination with respect to a longitudinal direction of the housing, the second antennas spaced apart from the first antennas arranged on the same side by a predetermined distance in the longitudinal direction, to enable the at least one set of first antennas and the at least one set of second antennas to have a predetermined antenna isolation; a controller configured to adjust, based on an operating mode of the network device, a phase and an amplitude of a channel associated with the at least one set of first antennas and/or the at least one set of second antennas, to make channel state information of a plurality of channels associated with a same set of first antennas and/or second antennas related or disrelated with each other.

FIG. 2

EP 4 576 600 A1

## Description

### FIELD

The example embodiments of the disclosure relate to the field of communication technologies, and in particular, to a network device, a method, an apparatus, and a computer readable storage medium.

### BACKGROUND

Recently, the 7th generation Wi-Fi technology (Wi-Fi 7) has attracted great attention and is considered to be a key feature of a Wi-Fi network. The design of Wi-Fi 7 may lead to higher data rate (e. g., 30G).

Through multi-link operation (MLO), the Wi-Fi 7 device can be connected to two frequency bands at the same time, which makes the aggregation speed faster. Alternatively, the two frequency bands may be used simultaneously to share redundant/unique data, thus to improve reliability with ultra-low and precise delays.

### SUMMARY

In a first aspect of the disclosure, a network device is provided. The network device comprises: a housing; at least one set of first antennas and at least one set of second antennas, respectively arranged on a plurality of sides of the housing at a 45 degrees inclination with respect to a longitudinal direction of the housing, the second antennas spaced apart from the first antennas arranged on the same side by a predetermined distance in the longitudinal direction, to enable the at least one set of first antennas and the at least one set of second antennas to have a predetermined antenna isolation; a controller configured to adjust, based on an operating mode of the network device, a phase and an amplitude of a channel associated with the at least one set of first antennas and/or the at least one set of second antennas, to make channel state information (CSI) of a plurality of channels associated with a same set of first antennas and/or second antennas related or disrelated with each other.

In a second aspect of the disclosure, a communication method is provided. The method comprises adjusting, based on an operating mode of the network device, a phase and an amplitude of a channel associated with at least one set of first antennas and/or at least one set of second antennas, to make channel state information of a plurality of channels associated with a same set of first antennas and/or second antennas related or disrelated with each other.

In a third aspect of the disclosure, an apparatus for communication is provided. The apparatus comprises means for adjusting, based on an operating mode of a network device, a phase and an amplitude of a channel associated with at least one set of first antennas and/or at least one set of second antennas, to make channel state information of a plurality of channels associated with a same set of first antennas and/or second antennas related or disrelated with each other.

In a fourth aspect of the disclosure, a computer readable storage medium is provided, on which a computer program is stored, the computer program comprising instructions that, when executed by a processor on a device, cause the device to perform the method of the second aspect.

It should be understood that what has been described in this summary section is not intended to limit the critical or important features of embodiments of the disclosure, nor is it intended to limit the scope of the disclosure. Other features of the disclosure will be easily understood by the following description.

### BRIEF DESCRIPTION OF THE DRAWINGS

The example embodiments of the disclosure are presented by way of example and their advantages are explained in greater detail below with reference to the accompanying drawings, in which:

Fig. 1 illustrates a schematic diagram of an environment in which example embodiments described herein may be implemented;
Fig. 2 shows a schematic diagram of an antenna arrangement according to some example embodiments of the disclosure;
Fig. 3 shows a schematic diagram of an antenna arrangement according to some example embodiments of the disclosure;
Figs. 4A and 4B show schematic diagrams of control circuit of a network device according to some example embodiments of the disclosure;
Figs. 5A and 5B show schematic diagrams of CSI measurements according to some example embodiments of the disclosure;
Fig. 6 shows a flowchart of a communication method according to some example embodiments of the disclosure;
Fig. 7 illustrates a simplified block diagram of a device suitable for implementing example embodiments of the disclosure; and
Fig. 8 shows a schematic drawing of a computer readable medium according to some example embodiments of the disclosure.

Throughout the drawings, the same or similar reference numerals represent the same or similar element.

### DETAILED DESCRIPTION

The principle and spirit of the disclosure will be described below with reference to some example embodiments illustrated in the accompanying drawings. It should be understood that these particular example embodiments are described only to help those skilled in the art to better understand and implement the disclosure, without suggesting any limitation as to the scope of the disclosure.

The term "comprise" and its variants used herein should be construed as open terms, which mean "comprise, but not limited to". The term "based on" should be read as "based at least in part on". The term "one embodiment" or "the embodiment" should be read as "at least one embodiment". The terms "first," "second," and the like may refer to different or identical objects. Other explicit and implicit definitions may also be included below.

As used herein, the term "determining" encompasses a wide variety of actions. For example, "determining" may include computing, calculating, processing, deriving, investigating, looking up (e. g., looking up in a table, a database or another data structure), ascertaining and the like. In addition, "determining" may include receiving (e. g., receiving information), accessing (e. g., accessing data in a memory), and the like. In addition, "determining" may include resolving, selecting, choosing, establishing, and the like.

Herein, unless explicitly stated otherwise, performing a step "in response to A" does not mean that the step is performed immediately after "A", but may include one or more intermediate steps.

The term "circuitry" as used herein, may refer to one or more of: (a) hardware-only circuit implementations (such as implementations in only analog and/or digital circuit); and (b) a combination of hardware circuit and software, such as (as applicable): (i) a combination of analog and/or digital hardware circuit with software/firmware, and (ii) any portions of a hardware processor with software (including digital signal processors, software, and memory that work together to cause an apparatus, such as an optical communications device or other computing device, to perform various functions); and (c) hardware circuit and/or a processor, such as a microprocessor or a portion of a microprocessor, that requires software (e. g., firmware) for operation, but the software may not be present when it is not needed for operation.

The definition of a circuitry applies to all use scenarios of this term in this application, including in any claims. As another example, the term "circuitry" as used herein also covers an implementation of merely hardware circuit or a processor (or multiple processors), or a portion of hardware circuit or a processor, or its (or their) accompanying software or firmware. The term circuitry also covers, for example and if applicable to the particular claim element, a baseband integrated circuit or processor integrated circuit or a similar integrated circuit in an OLT or other computing device.

As used herein, the term "communication network" refers to a network following any suitable communication standards, such as New Radio (NR), Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G) communication protocols, and/or any other protocols either currently known or to be developed in the future. The example embodiments of the present disclosure may be applied in various communication systems including, but not limited to, terrestrial communication systems, non-terrestrial communication systems, or combinations thereof. Given the rapid development in communications, there will of course also be future type communication technologies and systems with which the present disclosure may be embodied. It should not be seen as limiting the scope of the present disclosure to only the aforementioned system.

As used herein, the term "network device" refers to a network device and/or terminal device. The term "network device" may refer to a node in a communication network via which a terminal device accesses the network and receives services therefrom. The network device may refer to a base station (BS) or an access point (AP), for example, a node B (NodeB or NB), an evolved NodeB (eNodeB or eNB), an NR NB (also referred to as a gNB), a Remote Radio Unit (RRU), a radio header (RH), a remote radio head (RRH), a relay, an Integrated Access and Backhaul (IAB) node, a low power node such as a femto, a pico, and the like, depending on the applied terminology and technology.

As used herein, the term "terminal device" refers to any end device that may be capable of wireless communication. By way of example rather than limitation, a terminal device may also be referred to as a network device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), Universal Serial Bus (USB) dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the following description, the terms "terminal device", "network device", "terminal", "user equipment" and "UE" may be used interchangeably.

As used herein, the term "circuit" as used herein, may refer to one or more of:

(a) hardware-only circuit implementations (such as implementations in only analog and/or digital circuit); and
(b) a combination of hardware circuit and software, such as (as applicable):

(i) a combination of analog and/or digital hardware circuit with software/firmware, and
(ii) any portions of a hardware processor with software (including digital signal processors, software, and memory that work together to cause an apparatus, such as OLT or other computing device, to perform various functions); and

(c) hardware circuit and/or a processor, such as a microprocessor or a portion of a microprocessor, that requires software (e. g., firmware) for operation, but the software may not be present when it is not needed for operation.

The definition of a circuit applies to all use scenarios of this term in this application, including in any claims. As another example, the term "circuit" as used herein also covers an implementation of merely hardware circuit or a processor (or multiple processors), or a portion of hardware circuit or a processor, or its (or their) accompanying software or firmware. The term circuit also covers, for example and if applicable to the particular claim element, a baseband integrated circuit or processor integrated circuit or a similar integrated circuit in an OLT or other computing device.

As mentioned above, with the development of the Wi-Fi 7 technology, higher data rates can be achieved. The Wi-Fi 7 technology generally relates to technologies such as MLO, multiple input multiple output (MIMO), and 4096 quadrature amplitude modulation (QAM).

MLO is one of the key feature of Wi-Fi 7 technology. With MLO, a Wi-Fi 7 device may connect to two frequency bands at the same time, which makes the aggregation faster. Alternatively, both frequency bands may be used simultaneously to share redundant/unique data, thereby improving reliability at ultra-low and precise delays.

Because a gap between a high frequency band (5935 MHz) involved in the fifth generation mobile communication standard (5G) and a low frequency band (5945 MHz) involved in the sixth generation mobile communication standard (6G) is only 110 M, the signal interference cannot be avoided in an application process of the MLO.

For example, the transmit (TX) signal spurs in the receive (RX) band will be noise of the RX channel. To ensure that the RX channel works well, TX signal spurs should be suppressed by the filters and antennas.

Another key to MLO is Wi-Fi 7 technology is 4096 QAM, which means it requires higher signal-noise-ratio (SNR). On a 320MHz wide band, the requirement for Error Vector Magnitude (EVM) is -46dB.

In addition, for multi-user MIMO (MU-MIMO) of a WIFI 7 access point (for example, up to 16 users), 2G, 5G low frequency (5GL), 5G high frequency (5GH) and 6G will be firstly supported in the case that 16 antennas are required. This system is very complex and bulky and needs to occupy a large amount of space. In this case, a reasonable antenna arrangement is noteworthy.

Therefore, an embodiment of the present disclosure provides a network device. The network device comprises a housing, at least one set of first antennas and at least one set of second antennas. The at least one set of first antennas and the at least one set of second antennas are respectively arranged on a plurality of sides of the housing at a 45 degrees inclination with respect to a longitudinal direction of the housing. The second antennas are spaced apart from the first antennas arranged on the same side by a predetermined distance in the longitudinal direction, such that the at least one set of first antennas and the at least one set of second antennas have a predetermined antenna isolation. The network device further comprises a controller, which is configured to adjust, based on an operating mode of the network device, a phase and an amplitude of a channel associated with the at least one set of first antennas and/or the at least one set of second antennas, to make channel state information of a plurality of channels associated with a same set of first antennas and/or second antennas related or disrelated with each other.

In this way, on the one hand, higher isolation between antennas supporting different communication standards is ensured, so that better MLO and MU-MIMO performance can be ensured. On the other hand, the omnidirectionality of the signal may be ensured through phase modulation and amplitude modulation, so as to obtain a high-quality transmit signal.

The principles and example implementations of the disclosure will be described in further detail below with reference to the accompanying drawings.

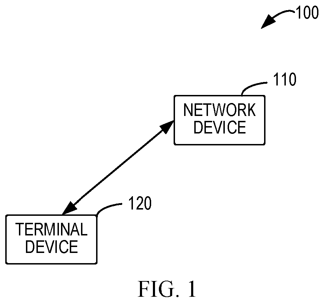

Fig. 1 illustrates a schematic diagram of an example communication environment 100 in which example embodiments described herein may be implemented. The communication environment 100 may be part of a communication network. In communication environment 100, network device 110 and terminal device 120 are included. The terminal device 120 may communicate with the network device 110.

In some example embodiments, the network device 110 may include a wireless router configured to provide wireless network coverage to an indoor environment in which the user is located. The wireless router may be a network device compliant with the 802.11 family of standards or implemented by any suitable device, such as a Wi-Fi Access Point (AP), the scope of the disclosure not being limited in this respect. The network device 110 may, for example, communicate with other network devices (e. g., base stations) to provide wireless network coverage for end devices within a particular range, the scope of the disclosure not being limited in this respect.

In some example embodiments, the link from the network equipment 110 to the terminal equipment 120 may be referred to as the downlink (DL), and the link from the terminal equipment 120 to the network equipment 110 may be referred to as the uplink (UL). In the DL, the network device 110 is a transmitting (TX) device (or transmitter), and the terminal device 120 is a receiving (RX) device (or receiver). In the UL, the terminal device 120 is a TX device (or transmitter), and the network device 110 is an RX device (or receiver).

It should be understood that the devices illustrated in Fig. 1 and the number of connections thereto are merely illustrative and not limiting. The communication environment 100 may include any suitable number of devices configured to implement example embodiments of the disclosure. Although not shown, it should be appreciated that one or more other devices can be deployed in the communication environment 100.

The communication in the communication environment 100 may be implemented in accordance with any suitable communication protocol(s). Examples of communication protocols include, but are not limited to cellular communication protocols such as first generation (1G), second generation (2G), 2.5G, 2.75G, third generation (3G), fourth generation (4G), 4.5G, fifth generation (5G), sixth generation (6G), and wireless local area network communication protocols such as Institute of Electrical and Electronics Engineers (IEEE) 802.11, and/or any other protocols that are currently known or will be developed in the future.

In addition, communication may utilize any suitable wireless communication technology, including, but not limited to, code division multiple access (CDMA), frequency division multiple access (FDMA), time division multiple access (TDMA), frequency division duplex (FDD), time division duplex (TDD), multiple-input multiple-output (MIMO), orthogonal frequency division multiplexing (OFDM), spread spectrum orthogonal frequency division multiplexing based on discrete Fourier transform (DFT-s-OFDM), and/or any other technology currently known or to be developed in the future.

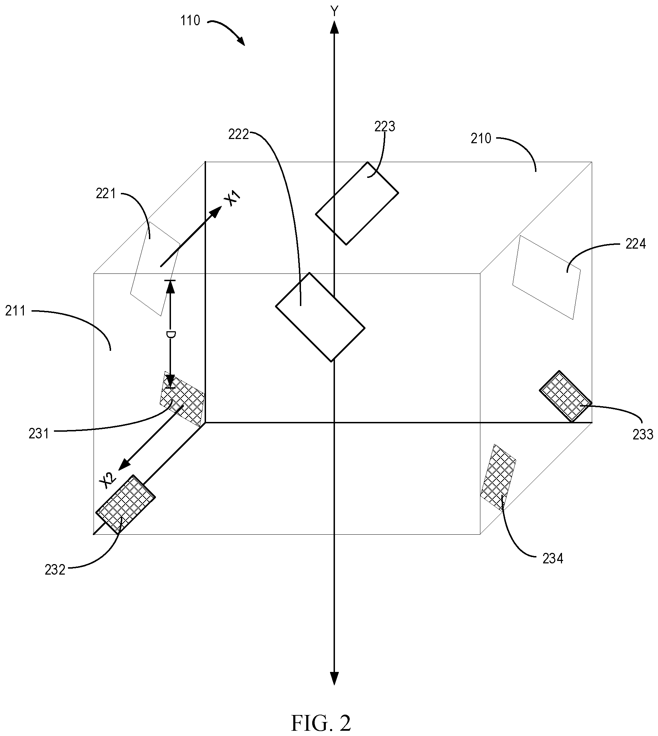

Fig. 2 shows a schematic diagram of an antenna arrangement of a network device 110 according to some example embodiments of the disclosure.

As shown in Fig. 2, the network device 110 may include a housing 210. In some embodiments, the housing 210 may be implemented as a cube. In some other embodiments, the housing 210 may be implemented as a cuboid having four sides of equal area.

The network device 110 may have a set of first antennas 221, 222, 223 and 224 and a set of second antennas 231, 232, 233 and 234. The set of first antennas 221, 222, 223 and 224 and the set of second antennas 231, 232, 233 and 234 are respectively arranged on the plurality of sides of the housing 210 at a 45 degrees inclination with respect to a longitudinal direction Y of the housing 210.

It should be understood that the plurality of sides herein may be inner sidewalls of housing 210. The set of first antennas 221, 222, 223 and 224 and the set of second antennas 231, 232, 233 and 234 are respectively arranged on the plurality of sides of the housing 210, which may be the fact that there is one first antenna in the set of first antennas 221, 222, 223 and 224 arranged on each of the plurality of inner side walls of the housing 210, and one second antenna in the set of second antennas 231, 232, 233 and 234 arranged on each of a plurality of inner side walls of the housing 210.

In some embodiments, the set of first antennas are antennas that support the fifth generation mobile communication standards, and the set of second antennas are antennas that support the sixth generation mobile communication standards. In some other implementations, the set of first antennas and/or the set of second antennas may simultaneously support more than one mobile communication standard. For example, the set of first antennas may support both a fifth generation mobile communication standards and a second generation mobile communication standards.

As shown in Fig. 2, the first antenna 221 and the second antenna 231 arranged on the same side 211 are spaced apart by a predetermined distance D in the longitudinal direction Y of the housing 210, which makes the first and second antennas supporting different mobile standards have a predetermined antenna isolation. For example, the antenna isolation is 30 dB. It should be understood that the first and second antennas arranged on the same other side are also spaced apart by a predetermined distance in the longitudinal direction Y of the housing 210, such that there is a predetermined antenna isolation between the first and second antennas supporting different mobile standards.

Further, the first antenna 221 and the second antenna 231 arranged on the same side 211 have opposite directions of inclination with respect to the longitudinal axis Y of the housing 210. As shown in Fig. 2, the first antenna 221 is inclined towards a first direction X1 with respect to the longitudinal axis Y of the housing 210, and the second antenna 231 is inclined towards a second direction X2 with respect to the longitudinal axis Y of the housing 210. It should be understood that the directions of inclination of the first and second antennas arranged on the same other side with respect to the longitudinal axis Y of the housing 210 are also opposite to each other. In this way, it can be ensured that the transmitted signal may be received well in the case of horizontal polarization and vertical polarization.

Although only one set of first antennas and one set of second antennas are shown on the housing in Fig. 2, it should be understood that more than one set of first antennas and more than one set of second antennas may also be arranged on the housing. For example, two sets of first antennas may be arranged. One set of first antennas support the fifth generation mobile communication standard. The other set of first antennas support more than one type of the mobile communication standard at the same time, for example, both the fifth generation mobile communication standard and the second generation mobile communication standard.

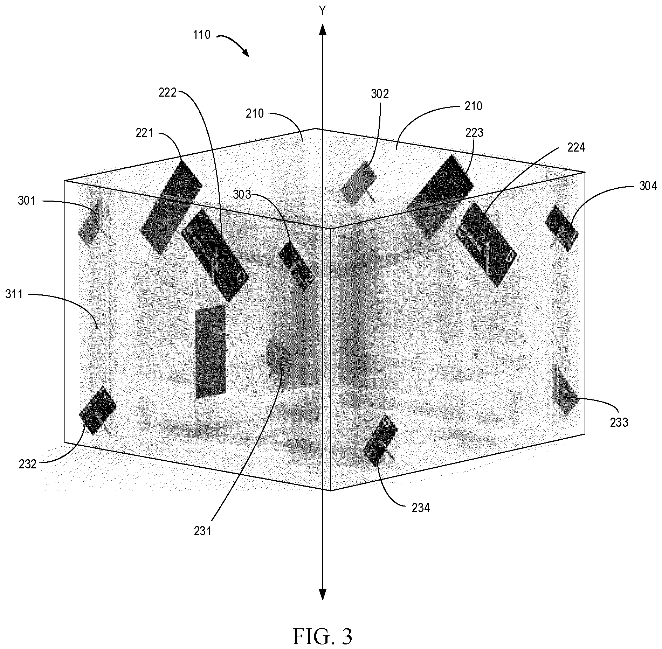

Fig. 3 shows a schematic diagram of an antenna arrangement of a network device 110 comprising multiple sets of first antennas according to some example embodiments of the disclosure. Note that components that are the same as or similar to those already described in connection with Fig. 2 are not described again in describing Fig. 3.

As shown in Fig. 3, the network device 110 comprises a housing 210. A first set of first antennas 221, 222, 223 and 224 and a second set of first antennas 301, 302, 303 and 304 are arranged on a plurality of sides of the housing 210, respectively. The first set of first antennas 221, 222, 223 and 224 and the second set of first antennas 301, 302, 303 and 304 are adjacent to the top face of the housing 210. A set of second antennas 231, 232, 233 and 234 are arranged on a plurality of sides of the housing 210, respectively. The set of second antennas are arranged to be adjacent to a bottom face of the housing 210.

As shown in Fig. 3, the first antenna 221 and the first antenna 301 are spaced apart from the second antenna 231 arranged on the same side 311 by a predetermined distance in the longitudinal direction Y of the housing 210, such that there is a predetermined antenna isolation between the first and second antennas supporting different mobile standards. For example, the antenna isolation is 30 dB. It should be appreciated that the plurality of first and second antennas arranged on the same other side are also spaced apart by a predetermined distance in the longitudinal direction Y of the housing 210, such that there is a predetermined antenna isolation between the first and second antennas supporting different mobile standards.

With the predetermined antenna isolation between antennas supporting different wireless communication standards, the frequency band interference therebetween can be significantly reduced, especially in the case where a gap between a high frequency band (5935 MHz) involved in 5G and a low frequency band (5945 MHz) involved in 6G is only 110M, such an antenna arrangement is beneficial for improving wireless signal quality.

With respect to the longitudinal axis Y of the housing 210, the first antennas 221, 301 have opposite directions of inclination with the second antenna 231 on the same side 311. While the first antenna 221 and the first antenna 301 have the same direction of inclination with respect to the longitudinal axis Y of the housing 210. It should be understood that the plurality of first antennas and the second antenna on the same other side have opposite directions of inclination with respect to the longitudinal axis Y of the housing 210, whereas the plurality of first antennas on the same other side have same directions of inclination with respect to the longitudinal axis Y of the housing 210.

In some embodiments, a mobile communication standard supported by the first set of first antennas and the second set of first antennas is different from a mobile communication standard supported by a set of second antennas. For example, the first set of first antennas and the second set of first antennas may be antennas that support the fifth generation of mobile communication standards, and the set of second antennas may be antennas that support the sixth generation of mobile communication standards. In some other implementations, the first set of antennas may be antennas that support the fifth generation mobile communication standard, and the second set of antennas may be antennas that support more than one mobile communication standard simultaneously, for example, the antennas that supports both the fifth generation mobile communication standard and the second generation mobile communication standard.

It should be understood that the fifth generation mobile communication standard may be divided into a 5G high frequency band (5GH) and a 5G low frequency band (5GL) according to a supported frequency band range. Although only second, fifth, and sixth generation mobile communication standards are mentioned above, it should be appreciated that the network devices of the disclosure may support other mobile communication standards as well. The scope of the disclosure is not limited in this respect.

In addition, although in the examples of Figs. 2 and 3, the number of antennas in each set is 4, that is, one of the antennas in one set is arranged on each side of the housing, it should be understood that the number of antennas in each set may also be 8 or 16, for example. The scope of the disclosure is not limited in this respect.

Although not shown in the examples of Figs. 2 and 3, the network device 110 may further include at least one set of third antennas, respectively arranged on the plurality of sides of the housing 210 at a 45 degrees inclination with respect to the longitudinal direction Y of the housing 210. The third antennas are spaced apart from the first antenna and the second antenna arranged on the same side by a predetermined distance in the longitudinal direction Y of the housing 210. In some embodiments, the at least one set of third antennas may be antennas supporting other communication standards different from the fifth and sixth generation mobile communication standards.

In some embodiments, the at least one set of first antennas, the at least one set of second antennas and the at least one set of third antennas are detachable.

In some embodiments, the at least one set of first antennas, the at least one set of second antennas and the at least one set of third antennas may be integrated into one track.

In some embodiments, the at least one set of first antennas, the at least one set of second antennas and the at least one set of third antennas are o-matrix antennas, that is, orthogonal omnidirectional matrix antennas.

Although the examples of Figs. 2 and 3 are not shown, the network device 110 of the disclosure further includes a controller. The controller is configured to adjust, based on an operating mode of the network device 110, a phase and an amplitude of a channel associated with the at least one set of first antennas and/or the at least one set of second antennas, to make channel state information of a plurality of channels associated with a same set of first antennas and/or second antennas related or disrelated with each other. The channel state information of one subcarrier may be represented as:

$$H(k) = \|H(k)\| e^{j \angle H(k)}$$

(1)

wherein H(k) represents channel state information of k subcarriers, $\|H(k)\|$ represents amplitudes of k subcarriers, and H(k) represents phases of k subcarriers. With channel state information, the amplitude and phase of each channel may be determined.

Herein, the channel state information represents how a wireless signal propagates from a transmitter to a receiver at a particular carrier frequency.

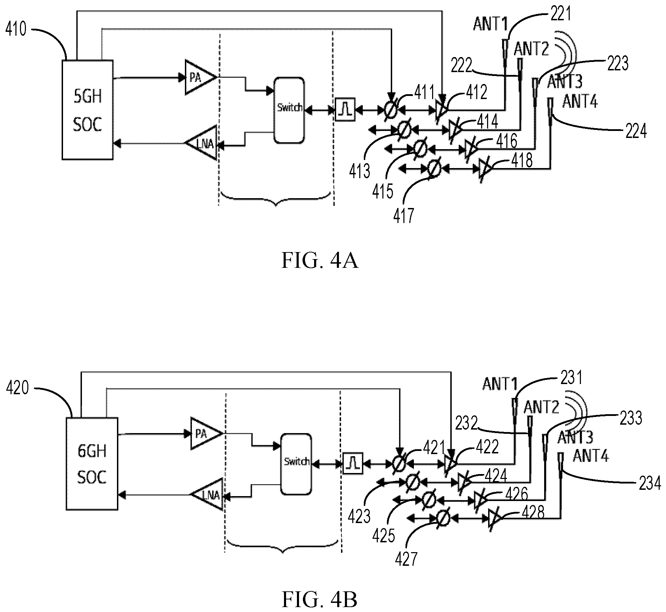

Figs. 4A and 4B show schematic diagrams of control circuit of a network device according to some example embodiments of the disclosure.

As shown in Fig. 4A, the controller 410 adjusts the phase and amplitude of each channel associated with the set of first antennas 221, 222, 223 and 224 shown in Fig. 2. Specifically, the first antenna 221 is connected to the phase modulator 411 and the amplitude modulator 412. The first antenna 222 is connected to the phase modulator 413 and the amplitude modulator 414. The first antenna 223 is connected to the phase modulator 415 and the amplitude modulator 416. The first antenna 224 is connected to the phase modulator 417 and the amplitude modulator 418. Those amplitude modulators and phase modulators are connected to a controller 410 respectively. In some embodiments, a set of first antennas 221, 222, 223 and 224 may be antennas that support 5GH.

As shown in Fig. 4B, the controller 420 adjusts the phase and amplitude of each channel associated with the set of second antennas 231, 232, 233 and 234 shown in Fig. 2. Specifically, the second antenna 231 is connected to the phase modulator 431 and the amplitude modulator 432. The second antenna 232 is connected to the phase modulator 423 and the amplitude modulator 424. The second antenna 233 is connected to the phase modulator 425 and the amplitude modulator 426. The second antenna 234 is connected to the phase modulator 427 and the amplitude modulator 418. Those amplitude modulators and phase modulators are connected to a controller 420 respectively. In some embodiments, a set of second antennas 231, 232, 233 and 234 are antennas that support a 6G high frequency band (6GH).

It should be understood that although the controller 410 configured for the set of first antennas 221, 222, 223, and 224 and the controller 420 configured for the set of second antennas 231, 232, 233, and 234 are shown in Figs. 4A and 4B respectively, the controller 410 and the controller 420 may also be implemented as the same controller in the network device 110. The scope of the disclosure is not limited in this respect.

The controller may adjust the amplitude and phase of the plurality of channels associated with the set of antennas based on the operating mode of the network device 110, such that channel state information of the plurality of channels associated with the same set of antennas is related or disrelated with each other.

In the example shown in Fig. 4A, for instance, in a beamforming mode, the controller 410 may make channel state information of the plurality of channels associated with the set of first antennas related with each other. For example, the channel state information of the plurality of channels associated with the set of first antennas is made to be approximately the same, i. e., the respective amplitudes and phases of the plurality of channels associated with the set of first antennas are made to be approximately the same. In this way, the quality of a wireless signal can be improved, and the throughput of data can be further improved.

In the example shown in Fig. 4A, for instance, in MIMO mode, the controller 410 may make channel state information of a plurality of channels associated with a set of first antennas disrelated with each other. Furthermore, in the MIMO mode, the amplitude of the plurality of channels associated with a set of first antennas may be adjusted, such that the radiation direction associated therewith may cover as wide a range as possible (e. g., the radiation pattern is a sphere). In this way, interference between different channels provided for multiple users can be reduced, thereby the quality of a wireless signal can be improved.

Accordingly, in the example shown in Fig. 4B, the controller 420 may also implement similar operations.

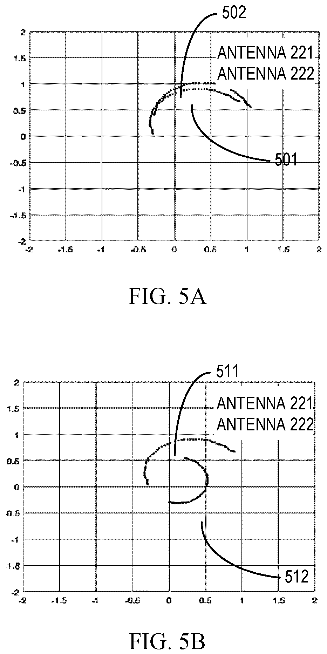

Figs. 5A and 5B illustrate a case in which channel state information of a plurality of channels associated with different antennas is related or disrelated to each other. In Fig. 5A, the channel state information 501 corresponding to the antenna 221 and the channel state information 502 corresponding to the antenna 222 are related to each other. In Fig. 5B, the channel state information 511 corresponding to the antenna 221 and the channel state information 512 corresponding to the antenna 222 are disrelated to each other.

Although a schematic diagram of control circuit for antennas supporting other communication standards is not shown, it should be understood that it may be similar to the control circuit in Figs. 4A and 4B.

By the above-described solution of the network device according to the disclosure, in this manner, on the one hand, higher isolation between antennas supporting different communication standards is ensured, thereby good MLO and MU-MIMO performance may be achieved. On the other hand, the omnidirectionality of the signal may be ensured through phase modulation and amplitude modulation, so as to obtain a high-quality transmit signal.

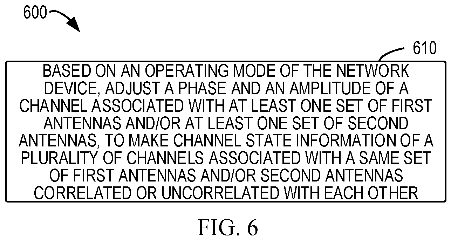

Fig. 6 shows a flowchart of a communication method according to some example embodiments of the disclosure. The method 600, for example, may be implemented in the communication environment 100, for example at the network device 110 and/or at the controller 410/420.

At block 610, the network device 110 adjusts, based on an operating mode of the network device, a phase and an amplitude of a channel associated with at least one set of first antennas and/or at least one set of second antennas, to make channel state information of a plurality of channels associated with a same set of first antennas and/or second antennas related or disrelated with each other.

In some example embodiments, adjusting the phase and the amplitude comprises: in a beamforming mode, adjusting the phase and the amplitude to make the channel state information of the plurality of channels associated with the same set of first antennas and/or second antennas related with each other.

In some example embodiments, adjusting the phase and the amplitude comprises: in a multiple input multiple output MIMO mode, adjusting the phase and the amplitude to make the channel state information of the plurality of channels associated with the same set of first antennas and/or second antennas disrelated with each other.

In some example embodiments, a mobile communication standard supported by the at least one set of first antennas is different from a mobile communication standard supported by the at least one set of second antennas.

In some example embodiments, the at least one set of first antennas comprises an antenna supporting a fifth generation mobile communication standard, and the at least one set of second antennas comprises an antenna supporting a sixth generation mobile communication standard.

In some example embodiments, the at least one set of first antennas further comprises an antenna supporting both the fifth generation of mobile communication standard and communication standards other than the sixth generation of mobile communication standards.

In some example embodiments, the network device is a wireless transceiver supporting a seventh generation Wi-Fi wireless standard.

In some example embodiments, an apparatus for communication may include means for performing corresponding steps of method 600. The means may be implemented in any suitable manner. For example, the means may be implemented as a circuit apparatus or a software module.

The apparatus for communication comprises means for adjusting, based on an operating mode of the network device, a phase and an amplitude of a channel associated with at least one set of first antennas and/or at least one set of second antennas, to make channel state information of a plurality of channels associated with a same set of first antennas and/or second antennas related or disrelated with each other.

In some example embodiments, the means for adjusting the phase and the amplitude comprises: the means for adjusting, in a beamforming mode, the phase and the amplitude to make the channel state information of the plurality of channels associated with the same set of first antennas and/or second antennas related with each other.

In some example embodiments, the means for adjusting the phase and the amplitude comprises: the means for adjusting, in a multiple input multiple output MIMO mode, the phase and the amplitude to make the channel state information of the plurality of channels associated with the same set of first antennas and/or second antennas disrelated with each other.

In some example embodiments, a mobile communication standard supported by the at least one set of first antennas is different from a mobile communication standard supported by the at least one set of second antennas.

In some example embodiments, the at least one set of first antennas comprises an antenna supporting a fifth generation mobile communication standard, and the at least one set of second antennas comprises an antenna supporting a sixth generation mobile communication standard.

In some example embodiments, the at least one set of first antennas further comprises an antenna supporting both the fifth generation of mobile communication standard and communication standards other than the sixth generation of mobile communication standards.

In some example embodiments, the apparatus is a wireless transceiver supporting a seventh generation Wi-Fi wireless standard.

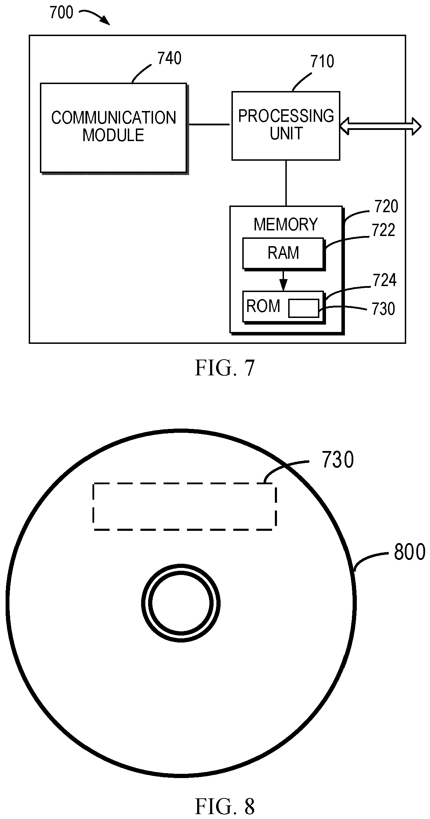

Fig. 7 is a simplified block diagram of a device 700 suitable for implementing example embodiments of the disclosure. The device 700 may be provided to implement the network device 110 in the communication environment 100. As shown, the device 700 includes one or more processing units 710, one or more memories 720 coupled to the processing unit 710, and a communication module 740 coupled to the processing unit 710.

The communication module 740 is used for bidirectional communications. In some example embodiments, the communication module 740 may include at least one antenna to facilitate communication. In some example embodiments, the communication module 740 has one or more communication interfaces. The communication interfaces may represent any interface that is necessary for communication with other network elements.

The processing unit 710 may be of any type suitable to the local technical network and may include, but not limited to, one or more of the following: general purpose computers, special purpose computers, microprocessors, digital signal processors (DSPs) and controller-based multicore controller architecture. The device 700 may have multiple processors, such as an application specific integrated circuit chip that is slaved in time to a clock which synchronizes the main processor.

The memory 720 may include one or more non-volatile memories and one or more volatile memories. Examples of the non-volatile memories include, but are not limited to, a Read Only Memory (ROM) 724, an electrically programmable read only memory (EPROM), a flash memory, a hard disk, a compact disc (CD), a digital video disk (DVD), and other magnetic storage and/or optical storage. Examples of the volatile memories include, but are not limited to, a random access memory (RAM) 722 and other volatile memories that will not last in the power-down duration.

A computer program 730 includes computer executable instructions that are executed by the associated processing unit 710. The computer program 730 may be stored in the ROM 1024. The processing unit 710 may perform any suitable actions and processing by loading the computer program 730 into the RAM 1022.

The example embodiments of the present disclosure may be implemented by means of the computer program 730, so that the device 700 may perform any process of the disclosure as discussed with reference to Fig. 2 to Fig. 6. The example embodiments of the present disclosure may also be implemented by hardware or by a combination of software and hardware.

In some example embodiments, the program 730 may be tangibly contained in a computer readable medium which may be included in the device 700 (such as in the memory 720) or other storage devices that are accessible by the device 700. The computer program 730 may be loaded from the computer readable medium to the RAM 722 for execution. The computer readable medium may include any types of tangible non-volatile storage medium, such as ROM, EPROM, a flash memory, a hard disk, CD, DVD, and the like. Fig. 8 shows an example of a computer-readable medium 800 in the form of a CD or DVD according to some example embodiments of the disclosure. A computer program 730 is stored on the computer-readable medium 800.

In general, various embodiments of the present disclosure may be implemented in hardware or special purpose circuits, software, logic or any combination thereof. Some aspects may be implemented in hardware, and other aspects may be implemented in firmware or software which may be executed by a controller, microprocessor or other computing device. Although various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

Some example embodiments of the present disclosure also provide at least one computer program product tangibly stored on a computer readable medium. In some example embodiments, the computer readable medium may be a non-transitory computer readable medium. The computer program product includes computer-executable instructions, such as those included in program modules, being executed in a device on a target physical or virtual processor, to carry out any of the method 600 referring to Fig. 6 as described above. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. The program code may be provided to a processor of a general purpose computer, special purpose computer, or other programmable data processing apparatus, such that the program code, when executed by a computer or other programmable data processing apparatus, causes the functions/operations specified in the flowcharts and/or block diagrams to be implemented. The program code may execute entirely on a computer, partly on the computer, as a stand-alone software package, partly on the computer and partly on a remote computer or entirely on the remote computer or server.

In the context of the present disclosure, the computer program code or related data may be carried by any suitable carrier to enable the device, apparatus or processor to perform various processes and operations as described above. Examples of the carrier include a signal, computer readable medium, and the like. Examples of signals may include electrical, optical, radio, acoustical or other forms of propagated signals such as carrier waves, infrared signals, etc.

The computer readable medium may be any tangible medium that contains or stores programs used for or regarding an instruction executing system, apparatus or device. A computer readable medium may be a computer readable signal medium or computer readable storage medium. The computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical storage device, a magnetic storage device, or any suitable combination of the foregoing.

Further, although operations of the method of the disclosure are depicted in a particular order in drawings, this should not be understood as requiring that such operations be performed in the particular order shown or in sequential order, or that all illustrated operations be performed, to achieve desirable results. On the contrary, the steps depicted in the flowcharts may change the order of execution. Additionally or alternatively, certain steps may be omitted, several steps may be combined into one step for execution, and/or one step may be divided into multiple steps for execution. It should also be noted that the features and functions of two or more apparatuses according to the disclosure may be embodied in one apparatus. Conversely, the features and functions of one of the above-described apparatuses may be further divided to be embodied by a plurality of apparatuses.

Although the disclosure has been described with reference to several specific embodiments, it should be understood that the disclosure is not limited to the specific embodiments disclosed. The disclosure is intended to cover various modifications and equivalent arrangements included within the spirit and scope of the appended claims.

**Claims**

1. A network device (110), comprising:

a housing (210);
at least one set of first antennas (221) and at least one set of second antennas (231), respectively arranged on a plurality of sides of the housing (210) at a 45 degrees inclination with respect to a longitudinal direction (Y) of the housing (210), the second antennas (231) spaced apart from the first antennas (221) arranged on the same side by a predetermined distance in the longitudinal direction (Y), to enable the at least one set of first antennas (221) and the at least one set of second antennas (231) to have a predetermined antenna isolation;

a controller configured to adjust, based on an operating mode of the network device, a phase and an amplitude of a channel associated with the at least one set of first antennas and/or the at least one set of second antennas, to make channel state information of a plurality of channels associated with a same set of first antennas and/or second antennas related or disrelated with each other.

2. The network device (110) of claim 1, wherein each antenna of the at least one set of first antennas and the at least one set of second antennas is configured with a respective amplitude modulator and a respective phase modulator, and the controller adjusts an amplitude and a phase of a channel associated with each antenna by controlling the respective amplitude modulator and the respective phase modulator.

3. The network device (110) of any of the preceding claims, wherein the controller, in a beamforming mode, makes channel state information of the plurality of channels associated with the same set of first antennas and/or second antennas related with each other.

4. The network device (110) of any of the preceding claims, wherein the controller, in a multiple input multiple output, MIMO, mode, makes channel state information of the plurality of channels associated with the same set of first antennas and/or second antennas disrelated with each other.

5. The network device (110) of any of the preceding claims, wherein the first antenna (221) and the second antenna (231) on the same side of the housing (210) have opposite directions of inclination with respect to the longitudinal axis (Y).

6. The network device (110) of any of the preceding claims, wherein a) the at least one set of first antennas (221) respectively arranged on the plurality of sides are adjacent to a top face of the housing (210), and wherein the at least one set of second antennas (231) respectively arranged on the plurality of sides are adjacent to a bottom face of the housing (210),

and/or b) the housing (210) is a cube or a cuboid having four sides of equal area,
and/or c) the predetermined isolation between the at least one set of first antennas (221) and the at least one set of second antennas (231) is no less than 30 dB,
and/or d) a mobile communication standard supported by the at least one set of first antennas (221) is different from a mobile communication standard supported by the at least one set of second antennas (231),

and/or e) the at least one set of first antennas (221) comprises an antenna supporting a fifth generation mobile communication standard, and the at least one set of second antennas (231) comprises an antenna supporting a sixth generation mobile communication standard, wherein for example the at least one set of first antennas (221) further comprises an antenna supporting both the fifth generation mobile communication standard and communication standards other than the sixth generation mobile communication standard.

7. The network device (110) of any of the preceding claims, wherein the at least one set of first antennas (221) and the at least one set of second antennas (231) are detachable.

8. The network device (110) of any of the preceding claims, further comprising:

at least one set of third antennas, respectively arranged on the plurality of sides of the housing (210) at a 45 degrees inclination with respect to a longitudinal direction (Y) of the housing (210), the third antennas spaced apart from first and second antennas arranged on the same side by a predetermined distance in the longitudinal direction (Y),
wherein for example the at least one set of third antennas are antennas supporting other communication standards different from the fifth and sixth generation mobile communication standards.

9. The network device (110) of any of the preceding claims, wherein the network device (110) is a network device supporting a seventh generation Wi-Fi wireless network.

10. A communication method, comprising:
adjusting, based on an operating mode of the network device, a phase and an amplitude of a channel associated with at least one set of first antennas and/or at least one set of second antennas, to make channel state information of a plurality of channels associated with a same set of first antennas and/or second antennas related or disrelated with each other.

11. The communication method of claim 10, wherein adjusting the phase and the amplitude comprises:
in a beamforming mode, adjusting the phase and the amplitude to make the channel state information of the plurality of channels associated with the same set of first antennas and/or second antennas related with each other.

12. The communication method of any of the claims 10 to 11, wherein adjusting the phase and the amplitude comprises:
in a multiple input multiple output, MIMO, mode, adjusting the phase and the amplitude to make the channel state information of the plurality of channels associated with the same set of first antennas and/or second antennas disrelated with each other.

13. The communication method of any of the claims 10 to 12, wherein A) a mobile communication standard supported by the at least one set of first antennas is different from a mobile communication standard supported by the at least one set of second antennas,

and/or B) the at least one set of first antennas comprises an antenna supporting a fifth generation mobile communication standard, and the at least one set of second antennas comprises an antenna supporting a sixth generation mobile communication standard,
wherein for example the at least one set of first antennas further comprises an antenna supporting both the fifth generation of mobile communication standard and communication standards other than the sixth generation of mobile communication standards
and/or C) the network device is a wireless transceiver supporting a seventh generation Wi-Fi wireless standard.

14. An apparatus for communication, comprising:
means for adjusting, based on an operating mode of a network device, a phase and an amplitude of a channel associated with at least one set of first antennas and/or at least one set of second antennas, to make channel state information of a plurality of channels associated with a same set of first antennas and/or second antennas related or disrelated with each other.

15. A computer readable storage medium having stored thereon a computer program comprising instructions that, when executed by a processor on a device, cause the device to perform the method of any of claims 10-14.

100

110

NETWORK
DEVICE

120

TERMINAL
DEVICE

FIG. 1

FIG. 2

FIG. 3

FIG. 4A

FIG. 4B

FIG. 5A

FIG. 5B

600

610

BASED ON AN OPERATING MODE OF THE NETWORK DEVICE, ADJUST A PHASE AND AN AMPLITUDE OF A CHANNEL ASSOCIATED WITH AT LEAST ONE SET OF FIRST ANTENNAS AND/OR AT LEAST ONE SET OF SECOND ANTENNAS, TO MAKE CHANNEL STATE INFORMATION OF A PLURALITY OF CHANNELS ASSOCIATED WITH A SAME SET OF FIRST ANTENNAS AND/OR SECOND ANTENNAS CORRELATED OR UNCORRELATED WITH EACH OTHER

FIG. 6

FIG. 7

FIG. 8

# EUROPEAN SEARCH REPORT

**Application Number**

EP 24 22 0783

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/308599 A1 (HUJANEN ARTO [FI] ET AL) 20 October 2016 (2016-10-20) | 10-15 | INV.<br>H04B7/0413 |
| Y | * paragraphs [0022] - [0023], [0035], [0043] - [0046]; figures 3,4 * <br> ----- | 1-9 | H04B7/06 |
| Y | US 2010/225552 A1 (SHIMIZU TAKAYUKI [JP] ET AL) 9 September 2010 (2010-09-09) <br> * paragraphs [0053] - [0055]; figure 4b * <br> ----- | 1-9 | |

**TECHNICAL FIELDS SEARCHED (IPC)**

H04B
H01Q

The present search report has been drawn up for all claims

| Place of search | Date of completion of the search | Examiner |
|---|---|---|
| Munich | 29 April 2025 | Sälzer, Thomas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.......................................................................
& : member of the same patent family, corresponding
document

## ANNEX TO THE EUROPEAN SEARCH REPORT
## ON EUROPEAN PATENT APPLICATION NO.

EP 24 22 0783

This annex lists the patent family members relating to the patent documents cited in  the above-mentioned European search report.
The members are as contained in the European Patent Office EDP file on
The European Patent Office is in no way liable for these particulars which are merely given for the purpose of information.

29-04-2025

| Patent document cited in search report | Publication date | Patent family member(s) | Publication date |
|---|---|---|---|
| US 2016308599 A1 | 20-10-2016 | EP 3078125 A1 | 12-10-2016 |
| | | ES 2808568 T3 | 01-03-2021 |
| | | FI 20136219 A7 | 05-06-2015 |
| | | US 2016308599 A1 | 20-10-2016 |
| | | WO 2015082771 A1 | 11-06-2015 |
| US 2010225552 A1 | 09-09-2010 | JP 5386721 B2 | 15-01-2014 |
| | | JP 2010233214 A | 14-10-2010 |
| | | US 2010225552 A1 | 09-09-2010 |

EPO FORM P0459

For more details about this annex : see Official Journal of the European Patent Office, No. 12/82